# FASCICULE DE BREVET EUROPEEN

(11) **EP 4 101 720 B1**
(45) Date de publication et mention de la délivrance du brevet: **11.12.2024**
(21) Numéro de dépôt: 22178143.8
(22) Date de dépôt: 09.06.2022
(51) Int. Cl.: B61D 17/10

(54) **STRUCTURE DE CHÂSSIS POUR VÉHICULE**
FAHRGESTELLSTRUKTUR FÜR FAHRZEUG
FRAME STRUCTURE FOR A VEHICLE

(30) Priorité: 11.06.2021 FR 2106170
(43) Date de publication de la demande: 14.12.2022
(73) Titulaire: ALSTOM Holdings, 93400 Saint-Ouen-sur-Seine (FR)
(72) Inventeur: ROLL, Stéphane, 67170 Brumath (FR); TRITZ, Bernard, 67110 Niederbronn les Bains (FR); SAMAIN, Joël, 59570 Obies (FR); KEERSBULIK, Jérémy, 17220 La Jarne (FR)
(74) Mandataire: Lavoix

(56) Documents cités:
- EP-A1- 1 787 797
- WO-A1-2012/010362
- AT-U1- 12 884
- CN-A- 111 976 762
- DE-A1- 19 841 082
- DE-U1- 29 518 858
- DE-U1- 9 410 972
- JP-A- 2000 052 982

## Description

La présente invention concerne une structure de châssis pour véhicule, notamment ferroviaire, du type comportant un panneau sandwich, ledit panneau comportant une plaque métallique inférieure ; une plaque métallique supérieure ; et une couche de matériau isolant thermique, disposée entre les plaques métalliques inférieure et supérieure.

Un plancher de véhicule ferroviaire type métro se doit de présenter une résistance au feu et/ou à la chaleur. De manière classique, comme décrit dans le document EP2639132, un plancher de véhicule ferroviaire comporte un panneau structurel, destiné à supporter des charges mécaniques, sous lequel est disposé un panneau d'isolation thermique. Ledit panneau comporte notamment une couche d'isolant thermique, protégée par une plaque métallique. Le document DE19841082 décrit une structure de plancher similaire, comprenant notamment une plaque de bois entre deux plaques métalliques.

Une telle configuration nécessite plusieurs niveaux superposés, ce qui augmente le poids final et complique la réalisation du plancher.

La présente invention a pour but de proposer une structure de plancher apte à supporter des charges mécaniques et comportant une protection à la chaleur, pour un poids optimisé et une réduction significative du nombre de pièces.

A cet effet, l'invention a pour objet une structure de plancher du type précité, conforme aux caractéristiques de la revendication 1.

Suivant d'autres aspects avantageux de l'invention, la structure de plancher comporte l'une ou plusieurs des caractéristiques suivantes, prises isolément ou suivant toutes les combinaisons techniquement possibles :
- la couche de matériau isolant thermique comporte : une face inférieure, en contact avec la plaque métallique inférieure ; et une face supérieure, en contact avec la plaque métallique supérieure, ladite couche étant formée d'une pièce entre lesdites faces inférieure et supérieure ;
- le bois ou l'écorce formant la plaque est choisi(e) parmi le balsa et le liège ;
- le panneau sandwich présente une forme allongée selon une direction longitudinale, la structure comprenant en outre des rails assemblés à la plaque métallique inférieure, chaque rail s'étendant selon la direction longitudinale et présentant une rainure orientée à l'opposé de ladite plaque métallique ;
- le panneau sandwich présente un contour sensiblement rectangulaire, ladite structure comprenant en outre un cadre métallique s'étendant sur ledit contour ;
- le cadre métallique présente deux profils sensiblement rectilignes s'étendant selon la direction longitudinale, chacun des profils comprenant un bord interne assemblé au panneau sandwich et un bord externe muni de moyens d'assemblage du véhicule ferroviaire ;
- le cadre métallique est réalisé en aluminium ou en acier.

L'invention se rapporte en outre à un ensemble comprenant : une structure de plancher telle que décrite ci-dessus ; et deux brancards sensiblement rectilignes s'étendant selon la direction longitudinale, chacun desdits brancards étant assemblé au bord externe d'un profil du cadre métallique.

L'invention se rapporte en outre à un véhicule ferroviaire comprenant un châssis et deux faces latérales, ledit châssis comprenant un ensemble tel que décrit ci-dessus, chacun des deux brancards étant assemblé à l'une des faces latérales.

L'invention sera mieux comprise à la lecture de la description qui va suivre, donnée uniquement à titre d'exemple non limitatif et faite en se référant aux dessins sur lesquels :
- la figure 1 est une vue de dessous d'une structure de plancher selon un mode de réalisation de l'invention ;
- la figure 2 est une vue de détail, en coupe, de la structure de plancher de la figure 1 ;
- la figure 3 est une vue de détail, en coupe, d'un ensemble comprenant la structure de plancher des figures 1 et 2 ;
- la figure 4 est une vue schématique, en coupe, d'un véhicule ferroviaire comprenant l'ensemble de la figure 3 ; et
- la figure 5 est une vue de détail, en coupe, d'un ensemble selon une variante de réalisation de la figure 3.

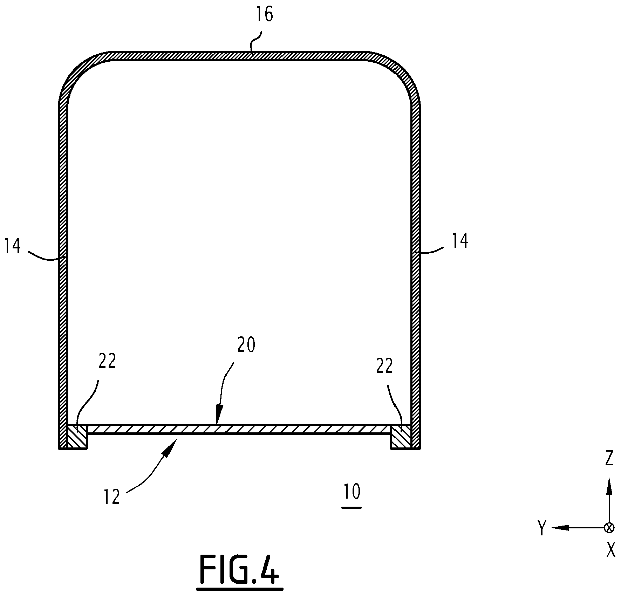

La figure 4 est une vue schématique d'un corps 10 de véhicule, notamment de véhicule ferroviaire. Le corps 10 a une forme tubulaire s'étendant selon une direction horizontale X, dite direction longitudinale et correspondant à une direction de déplacement du véhicule.

Le corps 10 comporte notamment un châssis 12, deux faces latérales 14 et une toiture 16.

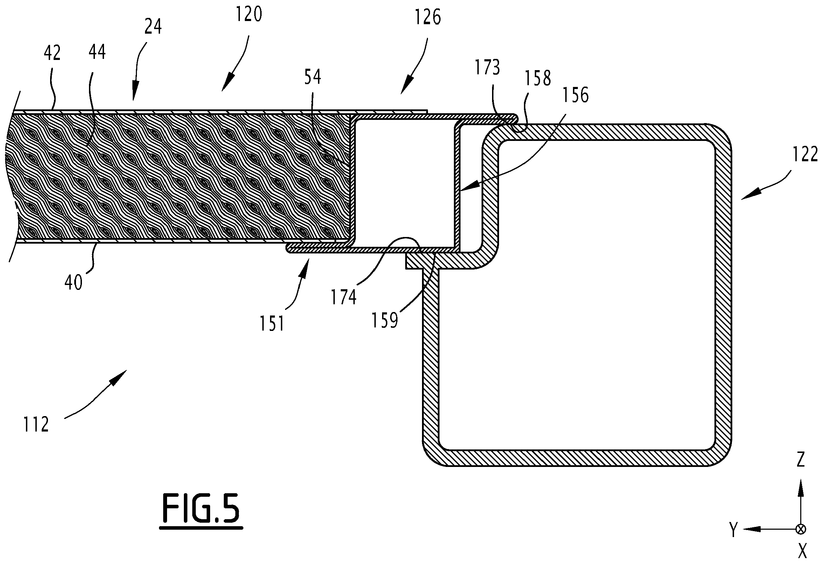

La figure 5 est une vue de détail d'un châssis 112, apte à remplacer le châssis 12 dans le corps 10. Dans la suite de la description, les châssis 12 et 112 seront décrits simultanément, les éléments communs étant désignés par les mêmes numéros de référence.

On considère une base orthonormée (X, Y, Z), la direction Z représentant la verticale.

Le châssis 12, 112 comporte notamment une structure 20, 120 de plancher et deux brancards 22, 122. Lesdits brancards 22, 122 seront décrits plus précisément par la suite.

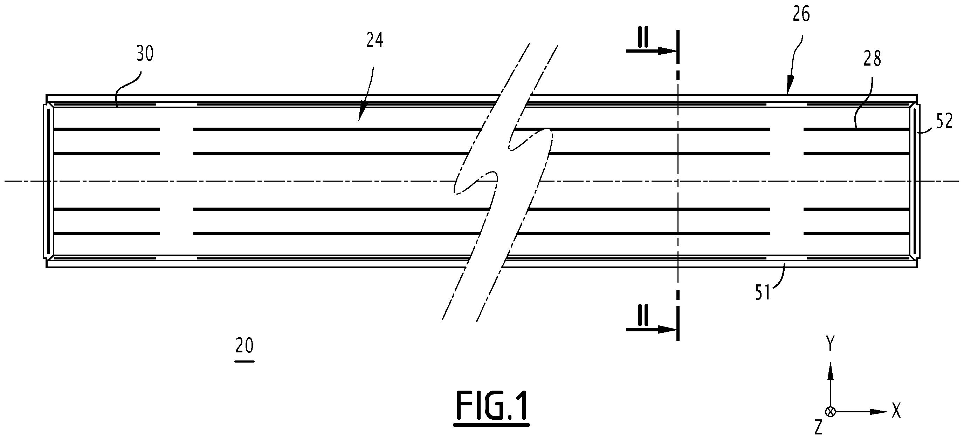

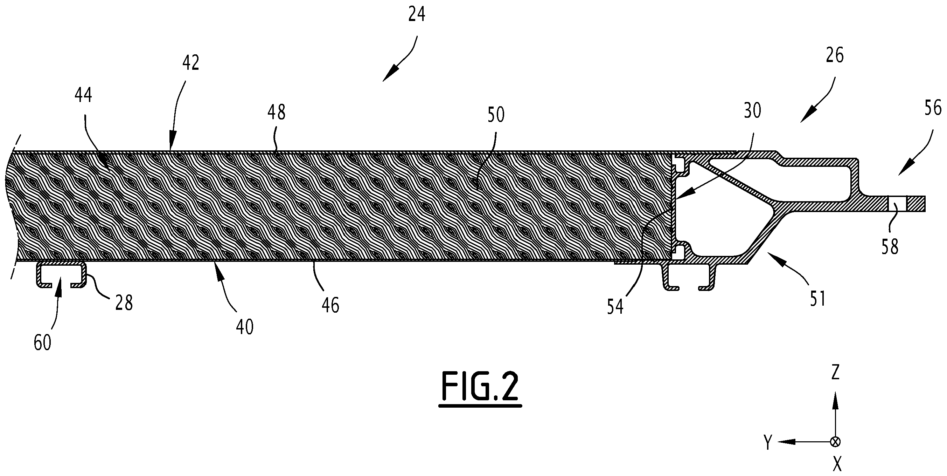

Les figures 1 et 2 représentent respectivement une vue de dessous et une vue en coupe de la structure de plancher 20. Une vue en coupe de la structure de plancher 120 est visible sur la figure 5.

La structure de plancher 20, 120 comporte un panneau sandwich 24, aussi appelé panneau composite 24, un cadre 26, 126 et des rails 28.

Le panneau 24 est parallèle à un plan (X, Y). Ledit panneau 24 présente un contour rectangulaire 30, de forme allongée selon la direction X. A titre indicatif, une longueur du panneau 24 selon X est de l'ordre de 5 à 20 mètres; et une largeur dudit panneau selon Y est de l'ordre de 2 à 3 mètres.

Comme visible sur les figures 2 et 5, le panneau sandwich 24 comporte une plaque métallique inférieure 40, une plaque métallique supérieure 42 et une couche 44 de matériau isolant thermique et structurel, disposée selon Z entre les plaques métalliques inférieure 40 et supérieure 42.

La couche 44 comporte une face inférieure 46 et une face supérieure 48, chacune desdites faces étant disposée dans un plan (X, Y). De préférence, la face inférieure 46 est en contact avec la plaque métallique inférieure 40 et la face supérieure 48 est en contact avec la plaque métallique supérieure 42.

A titre indicatif, une épaisseur de la couche 44 selon Z, entre les faces inférieure 46 et supérieure 48, est de l'ordre de 30 à 150 mm, plus préférentiellement de l'ordre de 40 à 100 mm.

Selon un mode préférentiel de réalisation, la couche 44 est formée d'une pièce selon Z, entre les faces inférieure 46 et supérieure 48. Plus préférentiellement, entre lesdites faces inférieure 46 et supérieure 48, la couche 44 est formée d'une plaque 50 de bois ou d'écorce ou de mousse.

La plaque 50 est choisie suffisamment rigide pour supporter des charges mécaniques correspondant à des éléments reçus à l'intérieur du corps 10 de véhicule.

De préférence, la plaque 50 est une plaque de balsa, qui permet d'obtenir une bonne rigidité combinée à un poids réduit et à une bonne résistance thermique. En variante, la plaque 50 est une plaque de liège, qui présente une meilleure résistance thermique mais une densité plus élevée.

La couche 44 du panneau sandwich 24 n'est pas nécessairement monobloc dans les directions X et Y. Par exemple, la couche 44 comprend plusieurs plaques 50 sensiblement identiques et assemblées dans un plan (X, Y).

Selon une variante de réalisation non représentée, la couche 44 est formée de plusieurs plaques empilées selon Z, par exemple une plaque de balsa et une plaque de liège.

La plaque métallique inférieure 40, orientée vers l'extérieur du corps 10 de véhicule, est réalisée en acier ou inox pour offrir une meilleure protection à la chaleur. En revanche, la plaque métallique supérieure 42, orientée vers l'intérieur du corps 10, est réalisée en aluminium afin de limiter le poids de la structure 20.

Chaque plaque métallique inférieure 40 ou supérieure 42 présente de préférence une épaisseur selon Z comprise entre 1 mm et 5 mm, plus préférentiellement comprise entre 1,5 mm et 2 mm.

De préférence, la couche 44 est assemblée par collage aux plaques métalliques inférieure 40 et supérieure 42. Plus préférentiellement, la colle utilisée est une colle céramique apte à supporter des températures élevées, par exemple de l'ordre de 600°C à 1200 °C. Une telle colle est par exemple de la colle réfractaire commercialisée sous la dénomination Pyrofeu.

Selon un mode de réalisation, la couche 44 est assemblée par collage avec la tôle supérieure au moyen de colle structurelle et avec la tôle inférieure 40 au moyen de colle céramique.

Dans le cas où la couche 44 comprend plusieurs plaques 50 de bois ou d'écorce assemblées dans un plan (X, Y), lesdites plaques 50 sont de préférence fixées les unes aux autres par une telle colle apte à supporter des températures élevées.

Le cadre 26 de la structure 20 comporte deux profils longitudinaux 51 et deux profils transversaux 52, assemblés au contour 30 du panneau 24 et respectivement disposés selon les directions X et Y. La figure 2 montre une vue en coupe d'un profil longitudinal 51.

De manière analogue, le cadre 126 de la structure 120 comporte deux profils longitudinaux 151 (figure 5) et deux profils transversaux non représentés.

Chaque profil 51, 151, 52 présente une forme tubulaire rectiligne et une section sensiblement constante, permettant une fabrication par extrusion métallique.

Les profils longitudinaux 51 et transversaux 52 du cadre 26 sont de préférence réalisés en aluminium. Les profils longitudinaux 151 et transversaux du cadre 126 sont de préférence réalisés en acier.

Chaque profil 51, 151, 52 présente un bord interne 54 et un bord externe 56, 156. Le bord interne 54 est assemblé au panneau sandwich 24, par exemple par collage au moyen de la colle décrite précédemment.

Le bord externe 56, 156 est muni d'un moyen d'assemblage au reste du corps 10 de véhicule.

Dans le mode de réalisation des figures 1 à 3, le moyen d'assemblage comporte un rivetage. En particulier, le bord externe 56 de chaque profil longitudinal 51 se présente sous forme d'une lame horizontale, comportant une série de trous traversants 58 alignés selon X.

Dans le mode de réalisation de la figure 5, le moyen d'assemblage comporte une soudure. En particulier, le bord externe 156 de chaque profil longitudinal 151 comporte au moins une zone 158, 159 de soudage, et de préférence au moins deux zones de soudage. Chaque zone 158, 159 de soudage se présente sous la forme d'une bande s'étendant selon X.

Les rails 28 sont fixés à la plaque métallique inférieure 40, à l'opposé de la couche 44 de matériau isolant thermique. Chaque rail s'étend sensiblement selon X et présente une section en C, formant une rainure 60 orientée vers le bas. Les rails 28 sont de préférence réalisés en acier.

Les rails 28 sont notamment destinés à la fixation d'éléments légers, de type dalles de câblage ou tuyauterie.

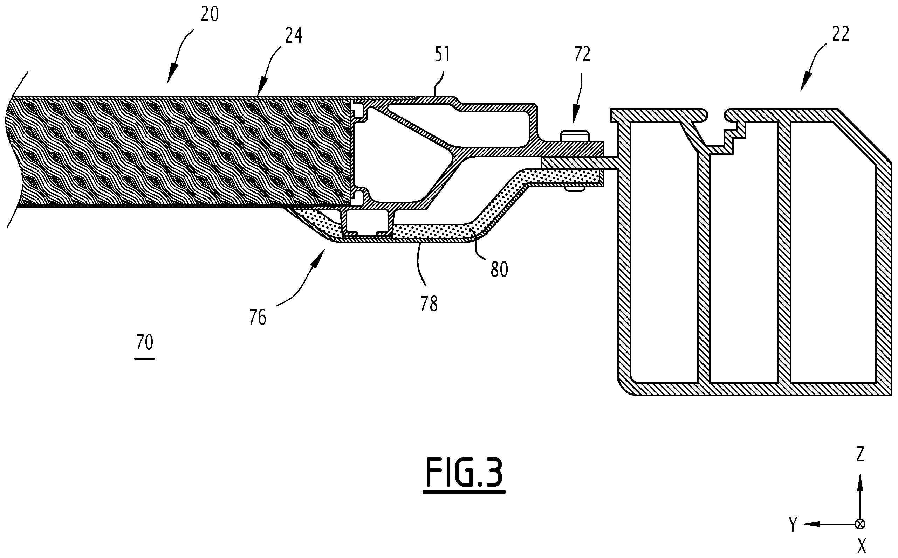

La figure 3 représente un ensemble 70 constituant une étape de fabrication du corps 10 de véhicule ferroviaire de la figure 4.

En particulier, l'ensemble 70 comporte la structure 20 des figures 1 et 2 et les deux brancards 22. Par ailleurs, comme indiqué précédemment, le châssis 112 représenté sur la figure 5 comporte la structure de plancher 120 précédemment décrite et les deux brancards 122. L'ensemble 70 et le châssis 112 seront décrits simultanément ci-après.

Chaque brancard 22, 122 présente une forme tubulaire rectiligne, s'étendant selon X. Chaque brancard 22, 122 présente une section sensiblement constante.

De préférence, le brancard 22, 122 est en aluminium ou en acier.

Chaque brancard 22, 122 est fixé au bord externe 56, 156 de l'un des profils longitudinaux 51, 151 de la structure 20, 120.

Dans le mode de réalisation de la figure 3, l'ensemble 70 comporte des rivets 72 disposés dans les trous traversants 58 du bord externe 56, et assemblant l'un à l'autre ledit bord externe et le brancard correspondant.

Dans le mode de réalisation de la figure 5, chaque brancard 122 comporte au moins une surface 173, 174 de soudage, et de préférence au moins deux surfaces de soudage. Chaque surface 173, 174 de soudage se présente sous la forme d'une bande s'étendant selon X. Chaque surface 173, 174 de soudage est soudée à l'une 158, 159 des zones de soudage du bord externe 156 de chaque profil longitudinal 151.

De préférence, dans le mode de réalisation de la figure 3, l'ensemble 70 comporte en outre deux bandes 76 de protection thermique, chaque bande étant disposée sous un profil longitudinal 51 et sous les interfaces entre ledit profil, le panneau sandwich 24 et le brancard 22. Chaque bande 76, fixée au reste de l'ensemble 70, comporte par exemple un platelage 78 en inox surmonté d'une couche 80 d'isolant de type laine de roche.

Cette protection thermique est aussi appliquée sur le profil transversal 52.

Un procédé de fabrication de la structure 20 va maintenant être décrit. La plaque métallique supérieure 42 est disposée sur un plan de travail, la face orientée vers le haut est enduite de colle céramique. Des plaques 50 de balsa, de forme rectangulaire, sont ensuite disposées bord à bord sur ladite plaque métallique supérieure 42. Les interfaces entre les plaques 50 sont encollées avant assemblage.

La couche 44 de matériau isolant thermique est ainsi formée, avec une face inférieure 46 orientée vers le haut. Ladite face inférieure est ensuite enduite de colle céramique, puis assemblée à la plaque métallique inférieure 40.

Après séchage de la colle, le panneau sandwich 24 ainsi obtenu est assemblé aux profils 51, 52 du cadre 26 et les rails 28 sont collés à la plaque métallique inférieure 40.

Les profils 51 et 52 du cadre 26 peuvent être aussi assemblées à des étapes précédentes.

La structure 120 de plancher est fabriquée selon un procédé analogue.

Une telle structure 20, 120 présente une bonne résistance au feu et à la chaleur, associée à un poids optimisé. La plaque métallique inférieure 40, en acier, évite le contact des flammes avec l'isolant thermique, de type balsa, de la couche 44. Ladite couche limite la conduction thermique jusqu'à la plaque métallique supérieure 42, en aluminium. En outre, le choix du matériau de la couche 44 permet au plancher de supporter les charges mécaniques appliquées à l'intérieur du corps 10 de véhicule ferroviaire, sans nécessité d'alourdir le plancher par l'ajout d'une structure porteuse.

## Revendications

1. Structure (20, 120) de plancher pour véhicule (10), comprenant un panneau sandwich (24), ledit panneau comportant :
- une plaque métallique inférieure (40) ;
- une plaque métallique supérieure (42) ; et
- une couche (44) de matériau isolant thermique, disposée entre les plaques métalliques inférieure et supérieure ;
la couche de matériau isolant thermique comprenant une plaque (50) de bois ou d'écorce ;
**caractérisée en ce que** la plaque métallique supérieure (42) est en aluminium et la plaque métallique inférieure (40) est en acier.

2. Structure de plancher selon la revendication 1, dans laquelle la couche (44, 50) de matériau isolant thermique comporte :
- une face inférieure (46), en contact avec la plaque métallique inférieure ; et
- une face supérieure (48), en contact avec la plaque métallique supérieure,
ladite couche étant formée d'une pièce entre lesdites faces inférieure et supérieure.

3. Structure de plancher selon la revendication 1 ou la revendication 2, dans laquelle le bois ou l'écorce formant la plaque (50) est choisi(e) parmi le balsa et le liège.

4. Structure de plancher selon l'une des revendications précédentes, dans laquelle le panneau sandwich (24) présente une forme allongée selon une direction longitudinale (X), la structure comprenant en outre des rails (28) assemblés à la plaque métallique inférieure (40), chaque rail s'étendant selon la direction longitudinale (X) et présentant une rainure (60) orientée à l'opposé de ladite plaque métallique.

5. Structure de plancher selon l'une des revendications précédentes, dans laquelle le panneau sandwich (24) présente un contour (30) sensiblement rectangulaire, ladite structure comprenant en outre un cadre métallique (26, 126) s'étendant sur ledit contour.

6. Structure de plancher selon la revendication 5 prise en combinaison avec la revendication 4, dans laquelle le cadre métallique présente deux profils (51, 151) sensiblement rectilignes s'étendant selon la direction longitudinale (X), chacun des profils comprenant un bord interne (54) assemblé au panneau sandwich (24) et un bord externe (56, 156) muni de moyens (58, 158, 159) d'assemblage du véhicule ferroviaire.

7. Structure de plancher selon l'une des revendications 5 ou 6, dans laquelle le cadre métallique (26, 126) est réalisé en aluminium ou en acier.

8. Ensemble (70, 112) comprenant : une structure de plancher (20, 120) selon la revendication 6 ou 7 ; et deux brancards (22, 122) sensiblement rectilignes s'étendant selon la direction longitudinale (X), chacun desdits brancards étant assemblé (72, 173, 174) au bord externe (56, 156) d'un profil (51, 151) du cadre métallique.

9. Véhicule (10), notamment ferroviaire, comprenant un châssis (12, 112) et deux faces latérales (14), ledit châssis comprenant un ensemble selon la revendication 8, chacun des deux brancards (22, 122) étant assemblé à l'une des faces latérales.

## Patentansprüche

1. Struktur (20, 120) eines Bodens für ein Fahrzeug (10), umfassend eine Sandwichplatte (24), die Platte umfassend:
- eine untere Metallplatte (40);
- eine obere Metallplatte (42); und
- eine Schicht (44) aus wärmeisolierendem Material, die zwischen der unteren und der oberen Metallplatte angeordnet ist;
die Schicht aus wärmeisolierendem Material umfassend eine Platte (50) aus Holz oder Rinde;
**dadurch gekennzeichnet, dass** die obere Metallplatte (42) aus Aluminium ist und die untere Metallplatte (40) aus Stahl ist.

2. Bodenstruktur nach Anspruch 1, wobei die Schicht (44, 50) aus wärmeisolierendem Material Folgendes umfasst:
- eine untere Fläche (46), die mit der unteren Metallplatte in Kontakt ist; und
- eine obere Fläche (48), die mit der oberen Metallplatte in Kontakt ist,
wobei die Schicht zwischen der unteren und der oberen Fläche in einem Stück gebildet ist.

3. Bodenstruktur nach Anspruch 1 oder 2, wobei das Holz oder die Rinde, das/die die Platte (50) bildet, ausgewählt ist aus Balsa und Kork.

4. Bodenstruktur nach einem der vorherigen Ansprüche, wobei die Sandwichplatte (24) eine längliche Form in einer Längsrichtung (X) aufweist, die Struktur ferner umfassend Schienen (28), die mit der unteren Metallplatte (40) verbunden sind, wobei sich jede Schiene in der Längsrichtung (X) erstreckt und eine Nut (60) aufweist, die von der Metallplatte weg ausgerichtet ist.

5. Bodenstruktur nach einem der vorherigen Ansprüche, wobei die Sandwichplatte (24) eine im Wesentlichen rechteckige Kontur (30) aufweist, die Struktur ferner umfassend einen Metallrahmen (26, 126), der sich über die Kontur erstreckt.

6. Bodenstruktur nach Anspruch 5, genommen in Kombination mit Anspruch 4, wobei der Metallrahmen zwei im Wesentlichen geradlinige Profile (51, 151) aufweist, die sich in der Längsrichtung (X) erstrecken, wobei jedes der Profile einen inneren Rand (54), der mit der Sandwichplatte (24) verbunden ist, und einen äußeren Rand (56, 156), der mit Einrichtungen (58, 158, 159) zum Zusammenbau des Schienenfahrzeugs versehen ist, umfasst.

7. Bodenstruktur nach einem der Ansprüche 5 oder 6, wobei der Metallrahmen (26, 126) aus Aluminium oder Stahl gefertigt ist.

8. Anordnung (70, 112), umfassend: eine Bodenstruktur (20, 120) nach Anspruch 6 oder 7; und zwei im Wesentlichen geradlinigen Tragen (22, 122), die sich in Längsrichtung (X) erstrecken, wobei jede der Tragen mit dem äußeren Rand (56, 156) eines Profils (51, 151) des Metallrahmens zusammengebaut (72, 173, 174) ist.

9. Fahrzeug (10), insbesondere Schienenfahrzeug, umfassend einen Rahmen (12, 112) und zwei Seitenflächen (14), wobei der Rahmen eine Anordnung nach Anspruch 8 umfasst, wobei jede der zwei Tragen (22, 122) mit einer der Seitenflächen zusammengebaut ist.

## Claims

1. A floor structure (20, 120) for a vehicle (10), comprising a composite panel (24), said panel including:
- a lower metal plate (40);
- an upper metal plate (42); and
- a layer (44) of thermal insulating material arranged between the lower and upper metal plates;
the layer of thermal insulating material comprising a panel (50) of wood or bark;
**characterized in that** the upper metal plate (42) is aluminum, and the lower metal plate (40) is steel.

2. The floor structure according to claim 1, wherein the layer (44, 50) of thermal insulating material includes:
- a lower face (46), in contact with the lower metal plate; and
- an upper face (48), in contact with the upper metal plate,
said layer being integrally formed between said lower and upper faces.

3. The floor structure according to claim 1 or claim 2, wherein the wood or bark forming the panel (50) is selected from balsa and cork.

4. The floor structure according to any of the preceding claims, wherein the composite panel (24) has an elongated shape according to a longitudinal direction (X), the structure further comprising rails (28) assembled to the lower metal plate (40), each rail extending according to the longitudinal direction (X) and presenting a groove (60) facing away from said metal plate.

5. The floor structure according to any of the preceding claims, wherein the composite panel (24) presents a substantially rectangular outline (30), said structure further comprising a metal frame (26, 126) extending on said outline.

6. The floor structure according to claim 5 taken in combination with claim 4, wherein the metal frame presents two substantially rectangular profiles (51, 151) extending according to the longitudinal direction (X), each of the profiles comprising an inner edge (54) connected to the composite panel (24) and an outer edge (56, 156) provided with means (58, 158, 159) for connecting the railway vehicle.

7. The floor structure according to one of claims 5 or 6, wherein the metal frame (26, 126) is made of aluminum or steel.

8. An assembly (70, 112) comprising: a floor structure (20, 120) according to claim 6 or 7; and two substantially straight bearers (22, 122) extending in the longitudinal direction (X), each of said bearers being joined (72, 173, 174) to the outer edge (56, 156) of a profile (51, 151) of the metal frame.

9. A vehicle (10), in particular a railway vehicle, comprising a chassis (12, 112) and two side faces (14), said chassis comprising an assembly according to claim 8, each of the two bearers (22, 122) being assembled to one of the side faces.
